Europäisches Patentamt

European Patent Office

Office européen des brevets

(11) Publication number: **0 166 441 B1**

## EUROPEAN PATENT SPECIFICATION

(45) Date of publication of patent specification: **04.03.92**

(51) Int. Cl.5: **H04L 12/28**, G06F 13/42, G06F 15/16

(21) Application number: **85107967.3**

(22) Date of filing: **27.06.85**

(54) **Computer network.**

(30) Priority: **29.06.84 US 625944**

(43) Date of publication of application:
**02.01.86 Bulletin 86/01**

(45) Publication of the grant of the patent:
**04.03.92 Bulletin 92/10**

(84) Designated Contracting States:
**DE FR GB IT NL**

(56) References cited:
**FR-A- 2 214 385**
**US-A- 3 652 993**
**US-A- 4 322 849**

**PATENT ABSTRACTS OF JAPAN, vol. 7, no. 80 (E-168)[1225], 2nd April 1983; & JP-A-58 7949 (OKI DENKI KOGYO K.K.) 17-01-1983**

(73) Proprietor: **Hewlett-Packard Company**
**Mail Stop 20 B-O, 3000 Hanover Street**
**Palo Alto, California 94304(US)**

(72) Inventor: **Caine, Nathanael T.**
**777 South Mathilda Ave**
**Sunnyvale California 94087(US)**
Inventor: **Simon, Jean-Jacques**
**6 Rue du Fournet**
**F-38120 Saint-Egreve(FR)**

(74) Representative: **Liesegang, Roland, Dr. et al**
**BOEHMERT & BOEHMERT Widenmayer-strasse 4/I**
**W-8000 München 22(DE)**

Rank Xerox (UK) Business Services

## Description

Prior art networks are shown in Figures 1-3. Figure 1 shows a star network where a plurality of network devices 11 through 16 are coupled as shown to a central device 10. Figure 2 shows a bus network where central device 10 and network devices 11 through 16 are all coupled as shown to a bus 20. In figure 3, central device 10 and network devices 11 through 16 are coupled in a loop network wherein information flows around the loop in a specified direction.

US-A-4,322,849 describes a data relay system for accessing large quantities of data. In the said system the data relays serve to receive data and to transmit these data to the host device. The host device gives addresses to the data relays.

From JP-A-56-105129 it is known to set a plurality of terminals to a loop transmission mode by a detecting signal and a loop pole command. According to the said system a so-called poling telegramm is transmitted between different terminals.

The object underlying the invention is to provide a network according to the pre-characterizing clause of the main claim, all the elements of the network can communicate with one another by not only transmitting data from the network devices to the central device, but also from the central device to any network device.

According to the invention the above object is aimed by a network according to claim 1.

Preferred embodiments of the invention are claimed in the subclaims.

In accordance with claim 1, a network is presented having substantial advantages over each of the above-mentioned networks. According to an underlying concept of the invention, each network device of the network is provided with a send path comprising a send input and a send output for receiving data signals from the preceding device in the chain and for transmitting data signals to the succeeding device in the chain as well as with a return path comprising a return input and a return output for receiving data signals from the succeeding device and for transmitting data signals to the preceding device. Each network device comprises means for selectively connecting its send path to its return path such that data signals coming from a preceding device can be directed to the return path of the device, thus providing a transmission path for the data signals back through all preceding devices of the network and finally into the central device.

In the network according to the invention, the network devices are coupled serially, thus forming a chain of devices. Data signals are transferred from the central device through each network device until a last network device in the chain is reached. The last network device returns the data signals to the central device back through the network devices.

If a new device is to be added to the chain, the send input and the return output of the new device are connected to the send output and the return input, respectively, of the last device in the chain, and the connection between the send output and the return input of the last device is opened and a connection between the send output and the return input of the added device is established. Thus, a new device can simply be attached just by connecting the send output and the return input of the last device with the send input and the return output of the new device, respectively.

Relative to the star and the bus networks, the network according to claim 1 has the advantage that there need not exist an information path for every network device directly to the central device and that the addition of network devices to the network is not limited by the number of available connection ports to the central device or to the bus.

Relative to the loop network, the network according to claim 1 has the advantage that network devices can be added without requiring to break prior connections and that the network device to be added has to be coupled only to a single device.

According to claim 2, data signals between the network devices can be transmitted in a bit serial manner, so that the interconnection between devices requires only two lines, one for the send path and one for the return path.

According to claim 4, the power lines for the various devices and the two data transmission lines can be combined in one cable. In this case, each device comprises a first receptacle for accepting the two data lines and the power lines from the preceding device and a second receptacle for accepting the two data lines and the power lines extending to the succeeding device. Thus, a new device can be added to the network and power can be supplied to the new device simply by plugging one end of a cable into the device to be added and the other end into the last device in the chain of network devices.

Subsequently, an embodiment of the invention is explained in detail with reference to the drawings.

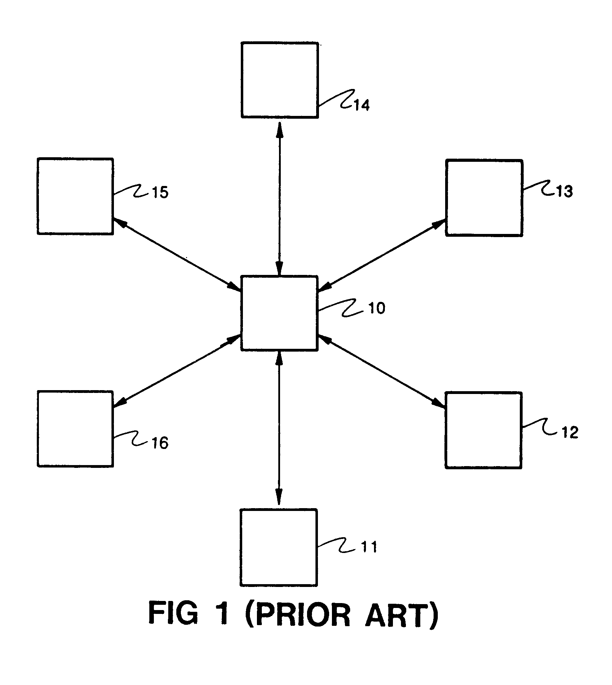

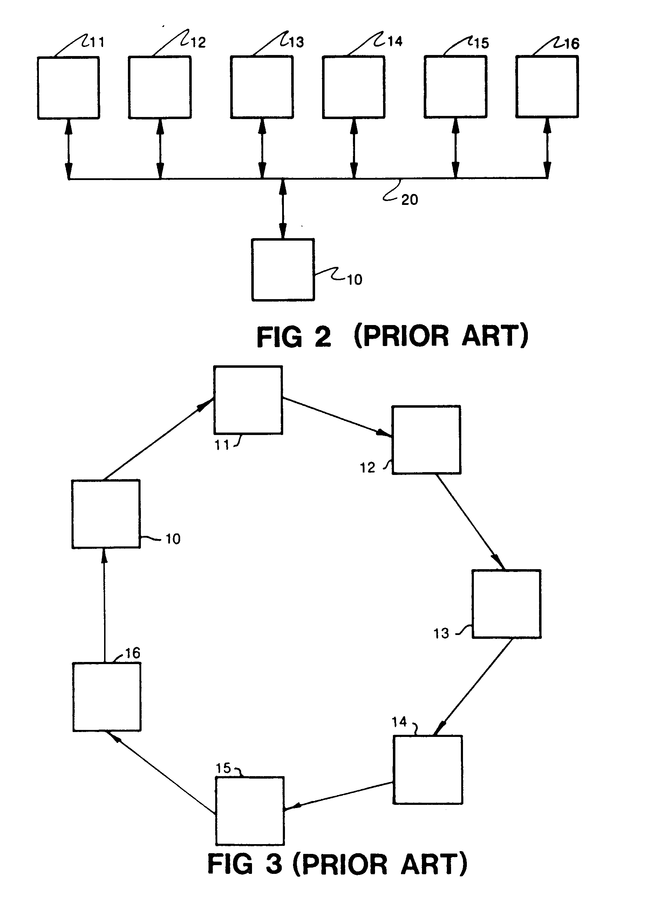

Figure 1, Figure 2, and Figure 3 show prior art networks.

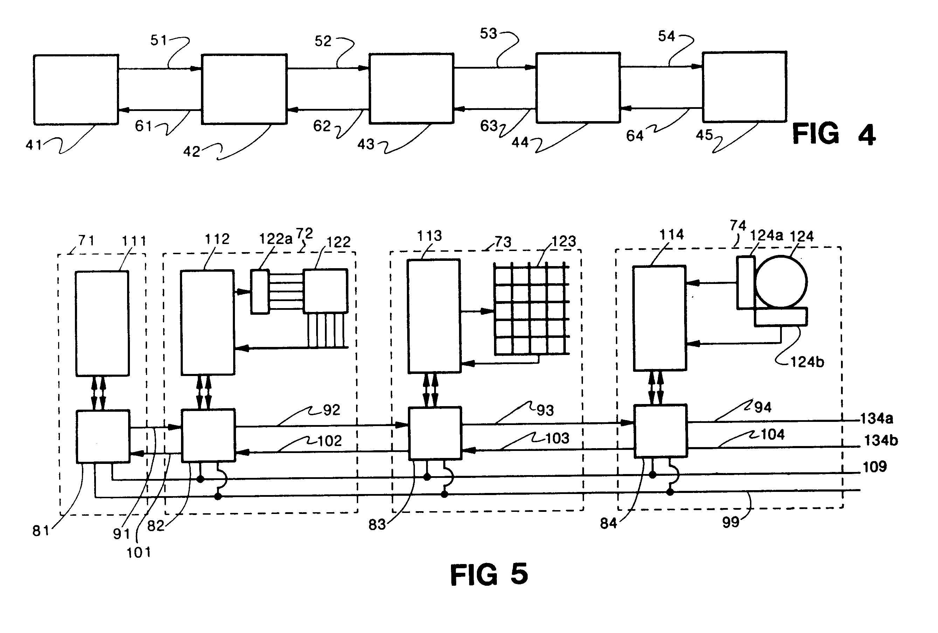

Figure 4 shows a network in accordance with the preferred embodiment of the present invention.

Figure 5 shows a network in accordance with the preferred embodiment of the present invention incorporated in user oriented devices.

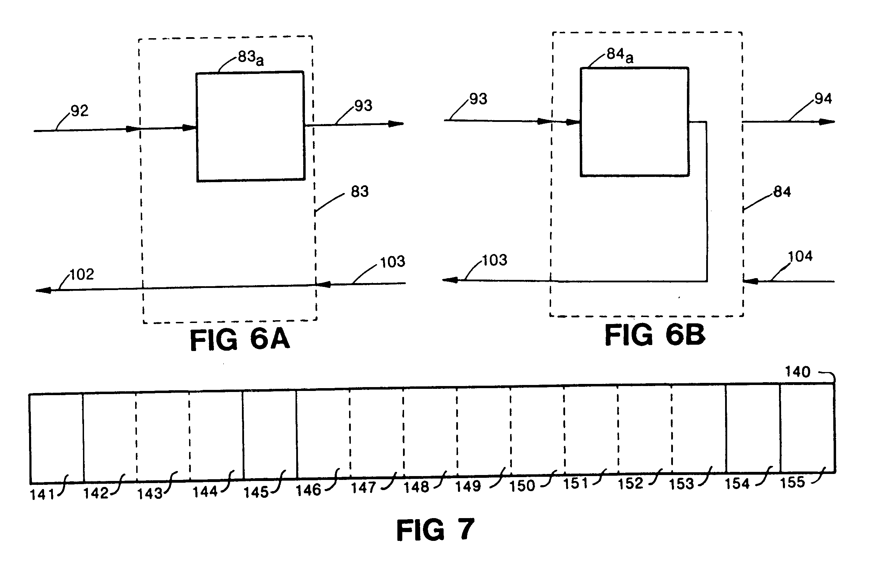

Figure 6A and Figure 6B show a network device in accordance with the preferred embodiment of the present invention.

Figure 7 shows a 15-bit data frame used with the network shown in Figure 5.

Figure 4 shows a network architecture in accordance with a preferred embodiment of the present invention. A central device 41 is coupled serially to network devices 42, 43, 44, and 45. Information from central device 41 flows through data paths 51, 52, 53, and 54. Network device 45 receives information from data path 54 and returns information through network devices 44, 43, and 42 to central device 41, by way of data paths 64, 63, 62, and 61.

Figure 5 shows how the network architecture shown in Figure 4 may be incorporated in a network for user oriented devices. A network interface device 71 may form part of a computer system. Within network interface device 71 may reside, for instance, a microprocessor 111 such as a 8086 manufactured by Intel Corporation of Santa Clara, California, and a central processor 81. Central processor 81 may be any processor or series of processors capable of handling the protocol described below. Through a send data path 91 and a return data path 101, central processor 81 is coupled to a network processor 82. Network processor 82 is coupled to a network processor 83 through a send data path 92 and a return data path 102. Network processor 83 is coupled to a network processor 84 through a send data path 93 and a return data path 103. Network processors 82, 83, and 84 may each be any processor or series of processor capable of handling the protocol described below.

Network processor 82 is coupled to a microcontroller 112 within a user oriented device (touchscreen circuit) 72, network processor 83 is coupled to a microcontroller 113 within a user oriented device (keyboard circuit) 73, and network processor 84 is coupled to a microcontroller 114 within a user oriented device (mouse circuit) 74. Microcontrollers 112-114 may each be, for instance, a COP 420, a COP 440 or a COP 2440, all of which are manufactured by National Semiconductor Corporation of Santa Clara, California. Microcontroller 112 is shown coupled to a touchscreen 122 through a touchscreen interface 122a. Microcontroller 113 is shown coupled to a keyboard 123, and microcontroller is shown coupled to a ball 124 through encoders 124a and 124b.

Additional network devices can be added to the network shown in Figure 5 through a port 134a and a port 134b. Port 134a is coupled to network processor 84 through a send data path 94, and port 134b is coupled to network processor 84 through a return data path 104. Network processors 82-84 along with any other processors added are collectively referred to as a (the) link. A power line 109 and a ground line 99 may also be coupled from network interface device 71 to each user oriented device 72-74 so that user oriented devices 72 - 74 do not need a separate power supply.

Figure 6A shows how information flows through network processor 83. Information from send data path 92 flows in into network processor 83, is processed by an information processor 83a and flows out to send data path 93. Information from return data path 103 flows directly through network processor 83 to return data path 102. Because network processor 83 sends information it receives to data path 93, it is said to be in passthrough mode.

Figure 6B shows how information flows through network processor 84. Information from send data path 93 flows into network processor 84, is processed by an information processor 84a and is directed to flow out to return data path 103. If another network processor were added to ports 134a and 134b (shown in Figure 5), then information paths within network processor 84 would be configured to be similar to the information paths within network processor 83 (as shown in Figure 6A). Because network processor 84 sends information back on return data path 103 it is said to be in loop back mode.

Many different protocols may be used by the network architecture. One embodiment, given as an example, sends data serially in fifteen bit data "frames". A frame 140 is shown in Figure 7. Bit 141 is a start bit indicating that a frame follows. In this embodiment, start bit 141 is always a "0".

Bits 142-144 are address bits. Address bits 142-144 may be used to address up to seven user oriented devices, leaving an address (000) to be used as a universal address.

A bit 145 is a "1" if frame 140 contains data and a "0" if frame 140 contains an encoded command. Bits 146 - 153 contain a byte of data or an encoded command as indicated by bit 145. Bit 154 is a parity bit used for error detection. Bit 155 is a stop bit, in this embodiment always a "1".

Upon initial activation, or whenever user oriented devices are added or subtracted from the network shown in Figure 5, each user oriented device needs to be assigned an address. The process of assigning addresses to each user oriented device in the network is called configuration. Configuration may be performed as follows.

Central processor 81 first sends out a Device Hard Reset command (FE$_{hex}$, see below for a table of commands and their hexadecimal representation). The Device Hard Reset command is sent with the universal address (000). Network processor 82 receives the Device Hard Reset command, resets microcontroller 112, and retransmits the Device Hard Reset Command to Network processor 83. Network processor 83 resets microcontroller 113 and retransmits the Device Hard Reset Command to Network processor 84, and so on. Upon receipt of the Device Hard Reset Command each network processor 82-84 goes into loop back mode.

Central processor 81 then individually assigns each network processor 82-84 an address. Central processor 81 sends an Interface Clear (IFC) Command ($00_{hex}$) with a universal address. Upon receipt and after performing a self test operation to assure its interface with microcontroller 112, network processor 82 loops the IFC command directly back to central processor 81.

Central processor 81 then sends an Auto Configure command ($09_{hex}$),using the universal address. Network processor 82 receives the Auto Configure command, notes that it is device #1, increments the Auto Configure command from $09_{hex}$ to $0A_{hex}$, and loops the Auto Configure command directly back to central processor 81.

At this point central processor is done configuring network processor 82, so it sends to network processor 82 an Enter Passthrough Mode command (01) with an address (in address bits 142-144) of $1_{hex}$. Network processor 82 then goes into passthrough mode (meaning it will then pass through all messages it receives to Network processor 83). The Passthrough Mode command is forwarded to network processor 83, which loops the message back to central processor 81 through network processor 82.

Central processor 81 is now ready to configure network processor 83. Central processor 81 sends an IFC command to network processor 82. Since network processor is already configured it ignores this command and forwards the IFC command to network processor 83. Network processor loops the IFC command back to central processor 81.

Central processor 81 then sends an Auto Configure command (09). Network processor 82 receives the command, increments the $09_{hex}$ to $0A_{hex}$, and retransmits the command to network processor 83. Network processor 83 receives the Auto Configure command, notes that it is device #2.

Network processor 83 then increments the Auto Configure command from $0A_{hex}$ to $0B_{hex}$ and loops the command back to central processor 81.

At this point central processor is done configuring network processor 83, so it sends to network processor 83 an Enter Passthrough Mode command (01) with an address (in address bits 142-144) of $2_{hex}$. Network processor 82 receives this command, notes that it is not addressed to Device #1, and so merely passes the message on to Network processor 83. Network processor 83 sees that the Enter Passthrough Mode command is addressed to it (Device #2), so it goes into passthrough mode (meaning it will then pass through all messages it receives to Network processor 84).

Central processor repeats the above configuring sequence with network processor 84, and with as many other network processors as are coupled to the network. The Auto Configure command is incremented by each network processor before sending it to the next network processor (if it is in passthrough mode) or back to the central processor (If it is in loopback mode). The Auto Configure command is incremented in the following sequence as it travels through each network processor:
09 -> 0A -> 0B -> 0C -> 0D -> 0E -> 0F -> 08

If a network processor receives an Auto Configure command which has been incremented to (08), then it knows that there are more than seven devices on the line. The network processor receiving a $08_{hex}$ in bits 146-153 would generate a Configure Error command ($FD_{hex}$) and sends it back to central processor 81. Presumably, at this point an error message is sent to a user who would remove some user oriented device from the network, limiting the number to 7.

If in the course of configuring the network, central processor 81 sends out an Enter Passthrough Mode command to a network processor, which is device #n (where n is a positive integer less than or equal to 7), and does not get a command back, then that means that device #n is the last device on the chain. So, after waiting for a specified length of time (e.g. 1/60 of a second), central processor 81 sends out an Enter Loopback Mode command (02) with addressed to device #n. At this point the network has been configured. Now central processor can send an Identify and Describe command (03) to each network processor 82-84, to find out what kind of device it is and what information it provides. The device will respond with a descriptor in an agreed upon format.

Once central processor 81 is ready to receive data from the link, it sends a Poll command ($10_{hex}$) with the universal address field. Network processor 82 receives this command, and if it has no data for central processor 81, it immediately forwards the Poll command to network processor 83. If network processor 82 does have information to return it performs the following sequence:

(1) transmits a poll response header frame with an address of $1_{hex}$ indicating the data is from device #1. The frame would include 8 bits of data in bits 146 - 153 which would inform central processor 81 and/or microprocessor 111 the format of the data bits to follow.

4

(2) transmits data frames (with an address of $1_{hex}$).

(3) adds a number equal to the number of data frames (the number of data frames would include the poll response frame) transmitted to the low nibble (bits 150-153) of the original Poll command, and then forwards the modified Poll command to network processor 83. For instance, if network processor 82 sent out 8 frames, it would increment bits 146-153 to be $18_{hex}$.

Network processor 83 performs in a manner similar to network processor 82. However, no more than fifteen frames may be sent in response to a Poll command. So, if network processor 83 sees that its response to the Poll command would require it to increment bits 150-153 to be greater than 15 (e.g., if network processor 82 sent out 8 frames, network processor 83 could send out 7 or fewer frames), then it will send the Poll command on to network processor 84 unmodified, and wait for the next Poll command.

Central processor 81 receives this data and forwards it to microprocessor 111. Central processor 81 may be prompted by microprocessor 111 to issue additional Poll commands, or central processor 81 may do so automatically.

The following table gives a summary of the commands listed with the hexadecimal encoded values within bits 146-153.

Table 1

| Command (hex value): | Name: |
|---|---|
| 00 | Interface Clear (IFC) |
| 01 | Enter Passthrough Mode |
| 02 | Enter Loopback Mode |
| 03 | Identify & Describe |
| 04 | Device Soft Reset |
| 05 | Perform Self Test |
| 06 | Command Trailer |
| 07 | Data Trailer |
| 09 (08 -> 0F) | Auto Configure |
| 10 (-> 1F) | Poll |
| 20 (-> 2F) | Repoll |
| 30 | Report Name |
| 31 | Report Status |
| 32 -> 3C | not used / reserved |
| 3D | Disable Autorepeat |
| 3E | Enable Autorepeat, Cursor Rate = 1/30 second |
| 3F | Enable Autorepeat, Cursor Rate = 1/60 second |
| 40 -> 47 | Prompt 0 -> 7 |
| 48 -> 4F | Acknowledge 0 -> 7 |
| 50 -> FA | not used / reserved |
| FB | Master Hard Reset |
| FC | Data Error |
| FD | Configure Error |
| FE | Device Hard Reset |
| FF | not used / prohibited |

**Claims**

1.  A network for the transmission of data signals between serially connected network devices (42,43,44,45) and at least one central device (41) for controlling the network devices and for processing data signals received from the network devices (42,43,44,45), said central device (41) being coupled to the first one (42) of said network devices (42,43,44,45), each of the network devices (42,43,44,45) comprising:
    - a send input being directly or indirectly connectable to a send output of the central device (41),
    - a send output having a transmission path from the send input of the network device (42) and being connectable to the send input of a further network device (43),
    - a return output being directly or indirectly connectable to a return input of the central device (41) for transmitting data signals thereto, and
    - a return input having a transmission path to the return output of the network device (42) and being connectable to the return output of the further network device (43) for receiving data signals therefrom,

    **characterized in that**

    - each network device (42,43,44,45) is capable of receiving data signals from the central device (41) via its send input,
    - each network device (42,43,44,45) is capable of transmitting data signals to any further network device (43,44,45) via its send output,
    - each network device (42,43,44,45) is provided with a switching means (82,83,84) for selectively interconnecting the send output of the network device (42,43, 44,45) with its own return input in such a manner that
        - an interconnection is established only between the send output and the return input of the last network device (45) in the network and
        - data signals transmitted to the last network device (45) from the preceding device (44) of the network are transmitted back to the return input of the preceding device (44).

2.  A network according to claim 1,
    **characterized** in that the data signals are transmitted bit-serially between the devices (41,42,43,44,45) of the network.

3.  A network according to claims 1 or 2,
    **characterized** in that the central device (41) and each network device (42,43,44,45) comprise means to supply power to the subsequent device in the network.

4.  A network according to any of the preceding claims,
    **characterized** in that for supplying power from one device of the network to a subsequent device, a pair (99,109) of power lines is connectable with its one end to an output of the device and with its other end to an input of the subsequent device, one power line (99) providing a reference potential and the other power line (109) providing a supply voltage.

5.  A network according to any of the preceding claims,
    **characterized** in that each network device comprises an information processor (83a) for processing data signals, the information processor having an input coupled to the send input of the network device and an output coupled to the send output of the network device.

**Revendications**

1.  Un réseau pour la transmission de signaux de données entre des dispositifs de réseau (42, 43; 44, 45) reliés en série et au moins un dispositif central (41) pour commander les dispositifs du réseau et pour traiter des signaux de données reçus en provenance des dispositifs de réseau (42, 43, 44, 45), ledit dispositif central (41) étant relié au premier (42) desdits dispositifs de réseau (42, 43, 44, 45), chacun des dispositifs de réseau (42, 43, 44, 45) comprenant :
    - une entrée d'envoi qui peut être reliée directement ou indirectement à une sortie d'envoi du dispositif central (41),

- une sortie d'envoi comportant une piste de transmission partant de l'entrée d'envoi du dispositif de réseau (42) et pouvant être reliée à l'entrée d'envoi d'un autre dispositif (43) du réseau,
- une sortie de retour pouvant être reliée directement ou indirectement à une entrée de retour du dispositif central (41) pour transmettre des signaux de données à celui-ci, et
- une entrée de retour comportant une piste de transmission reliée à la sortie de retour du dispositif de réseau (42) et pouvant être reliée à la sortie de retour de l'autre dispositif de réseau (43) pour recevoir des signaux de données provenant de celui-ci,

caractérisé en ce que :

- chaque dispositif de réseau (42, 43, 44, 45) est capable de recevoir des signaux de données provenant du dispositif central (41) par l'intermédiaire de son entrée d'envoi,
- chaque dispositif de réseau (42, 43, 44, 45) est capable de transmettre des signaux de données à tout autre dispositif de réseau (43, 44, 45) par l'intermédiaire de sa sortie d'envoi,
- chaque dispositif de réseau (42, 43, 44, 45) est pourvu d'un moyen de commutation (82, 83, 84) pour interconnecter sélectivement la sortie d'envoi du dispositif de réseau (42, 43, 44, 45) avec sa propre entrée de retour d'une manière telle que :
  - une interconnexion soit établie seulement entre la sortie d'envoi et l'entrée de retour du dernier dispositif (45) du réseau et
  - des signaux de données transmis au dernier dispositif (45) du réseau à partir du dispositif précédent (44) sont renvoyés à l'entrée de retour du dispositif précédent (44).

2. Un réseau selon la revendication 1, caractérisé en ce que les signaux de données sont transmis avec bits en série entre les dispositifs (41, 42, 43, 44, 45) du réseau.

3. Un réseau selon les revendications 1 ou 2, caractérisé en ce que le dispositif central (41) et chaque dispositif de réseau (42, 43, 44, 45) comprennent des moyens pour alimenter en courant le dispositif suivant dans le réseau.

4. Un réseau selon une quelconque des revendications précédentes, caractérisé en ce que, pour qu'un dispositif du réseau alimente en courant un dispositif suivant, une paire (99, 109) de lignes d'alimentation en courant peuvent être reliées par une extrémité à une sortie du dispositif et par leur autre extrémité à une entrée du dispositif suivant, une ligne d'alimentation (99) fournissant un potentiel de référence et l'autre ligne d'alimentation (109) fournissant une tension d'alimentation.

5. Un réseau selon une quelconque des revendications précédentes, caractérisé en ce que chaque dispositif de réseau comprend un processeur d'information (83a) pour traiter des signaux de données, le processeur d'information comportant une entrée reliée à l'entrée d'envoi du dispositif de réseau et une sortie reliée à la sortie d'envoi du dispositif de réseau.

**Patentansprüche**

1. Netzwerk für die Übertragung von Datensignalen zwischen seriell verbundenen Netzwerkeinrichtungen (42,43,44,45) und mindestens einer Zentraleinrichtung (41) zum Überwachen der Netzwerkeinrichtungen und zum Verarbeiten von Datensignalen, die von den Netzwerkeinrichtungen (42,43,44,45) empfangen worden sind, wobei die Zentraleinrichtung (41) mit der ersten (42) der Netzwerkeinrichtungen (42,43,44,45) verbunden ist, wobei jede der Netzwerkeinrichtungen (42,43,44,45) umfaßt:

- einen Sendeeingang, der direkt oder indirekt mit einem Sendeausgang der Zentraleinrichtung (41) verbindbar ist,
- einen Sendeausgang, der einen Übertragungspfad von dem Sendeeingang der Netzwerkeinrichtung (42) umfaßt und mit dem Sendeeingang einer weiteren Netzwerkeinrichtung (43) verbindbar ist,
- einen Rücklaufausgang, der direkt oder indirekt mit einem Rücklaufeingang der Zentraleinrichtung (41) verbindbar ist, um daran Datensignale zu übertragen, und
- einen Rücklaufeingang, der einen Übertragungspfad zu dem Rücklaufausgang der Netzwerkeinrichtung (42) aufweist und mit dem Rücklaufausgang der weiteren Netzwerkeinrichtung (43) verbindbar ist, um Datensignale davon zu empfangen,

dadurch **gekennzeichnet,** daß

- jede Netzwerkeinrichtung (42,43,44,45) Datensignale von der Zentraleinrichtung (41) über ihren Sendeeingang empfangen kann,
- jede Netzwerkeinrichtung (42,43,44,45) Datensignale an jede weitere Netzwerkeinrichtung (43,44,45) über ihren Sendeausgang übertragen kann,
- jede Netzwerkeinrichtung (42,43,44,45) eine Schalteinrichtung (82,83,84) zum selektiven Verbinden des Sendeausgangsder Netzwerkeinrichtung (42,43,44,45) mit ihrem eigenen Rücklaufeingang aufweist und zwar derart, daß
  - eine Verbindung nur Zwischen dem Sendeausgang und dem Rücklaufeingang der letzten Netzwerkeinrichtung (45) in dem Netzwerk hergestellt ist und
  - Datensignale, die an die letzte Netzwerkeinrichtung (45) von der vorhergehenden Einrichtung (44) des Netzwerks übertragen werden, zurück zu dem Rücklaufeingang der vorhergehenden Einrichtung (44) übertragen werden.

2. Netzwerk nach Anspruch 1, dadurch **gekennzeichnet,** daß die Datensignale bitseriell zwischen den Einrichtungen (41,42,43,44,45) des Netzwerks übertragen werden.

3. Netzwerk nach Anspruch 1 oder 2, dadurch **gekennzeichnet,** daß die Zentraleinrichtung (41) und jede Netzwerkeinrichtung (42,43,44,45) eine Einrichtung zum Versorgen der nachfolgenden Einrichtung in dem Netzwerk mit Energie aufweisen.

4. Netzwerk nach einem der vorangehenden Ansprüche, dadurch **gekennzeichnet,** daß zum Abgeben von Energie von einer Einrichtung des Netzwerks an eine nachfolgende Einrichtung ein Paar (99,109) Energieversorgungsleitungen mit seinem einen Ende an einen Ausgangsanschluß der Einrichtung und mit seinem anderen Ende an einen Eingangsanschluß der nachfolgenden Einrichtung anschließbar ist, wobei eine Energieversorgungsleitung (99) ein Bezugspotential zur Verfügung stellt und die andere Energieversorgungsleitung (109) eine Energieversorgungsspannung zur Verfügung stellt.

5. Netzwerk nach einem der vorangehenden Ansprüche, dadurch **gekennzeichnet,** daß jede Netzwerkeinrichtung einen Datenprozessor (83a) zum Verarbeiten von Datensignalen umfaßt, wobei der Datenprozessor einen Eingangsanschluß, der mit dem Sendeeingang der Netzwerkeinrichtung verbunden ist, und einen Ausgangsanschluß aufweist, der mit dem Sendeausgang der Netzwerkeinrichtung verbunden ist.

# FIG 1 (PRIOR ART)

**FIG 2 (PRIOR ART)**

**FIG 3 (PRIOR ART)**

**FIG 4**

**FIG 5**

EP 0 166 441 B1

83a

92

93

83

102

103

**FIG 6A**

84a

93

94

84

103

104

**FIG 6B**

140

141 142 143 144 145 146 147 148 149 150 151 152 153 154 155

**FIG 7**